# FASCICULE DE BREVET EUROPEEN

(11) **EP 2 523 144 B1**
(45) Date de publication et mention de la délivrance du brevet: **21.06.2017**
(21) Numéro de dépôt: 12163193.1
(22) Date de dépôt: 04.04.2012
(51) Int. Cl.: G06K 7/00, G06K 7/10

(54) **Procédé de détection d'un récépteur sans contact**
Verfahren zur kontaktlosen Erkennung eines Empfängers
Method for detecting a contactless receiver

(30) Priorité: 14.04.2011 FR 1153262
(43) Date de publication de la demande: 14.11.2012
(73) Titulaire: Commissariat à l'Énergie Atomique et aux Énergies Alternatives, 75015 Paris (FR)
(72) Inventeur: Thevenon, Pierre-Henri, 43210 Bas-en-Basset (FR); Savry, Olivier, 38360 Sassenage (FR)
(74) Mandataire: Guérin, Jean-Philippe

(56) Documents cités:
- EP-A1- 2 148 289
- EP-A2- 0 944 014
- WO-A2-2009/154987

## Description

L'invention concerne les communications sans fil par couplage inductif, typiquement mises en oeuvre dans des systèmes RFID ou pour des communications sans contact.

Un nombre croissant d'applications font appel à des transmissions sans contact. Des systèmes de communication de type RFID inductif ont notamment été développés et connaissent un essor important. Un tel système comprend une station de base ou lecteur, et un objet autonome comportant un numéro d'identification et fonctionnant en récepteur alimenté à distance. Le récepteur est généralement dénommé étiquette lorsqu'il est accolé à un produit, ou dénommé carte sans contact lorsqu'il est destiné pour de l'identification de personnes.

Dans de tels systèmes, on établit un lien par champ magnétique radiofréquence entre le lecteur et un ou plusieurs récepteurs. Ce champ magnétique est quasi-stationnaire. Les organes de couplage du lecteur et du récepteur sont des circuits conducteurs incluant des boucles, enroulements ou bobines formant un circuit d'antenne. Des composants électroniques sont associés au circuit d'antenne avec pour fonction de réaliser un accord en fréquence, un amortissement ou une adaptation d'impédance.

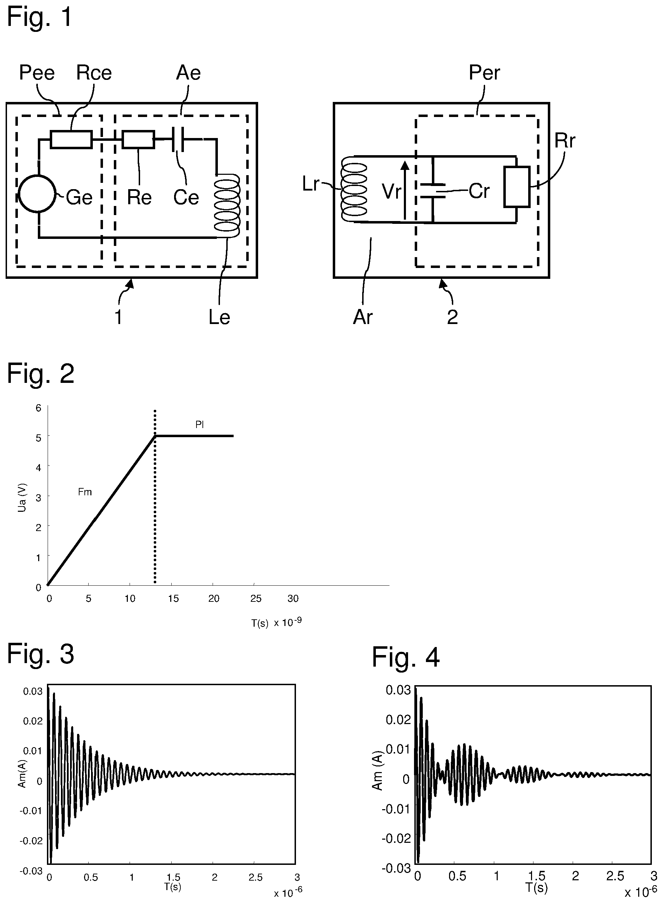

La figure 1 fournit un exemple schématique de la représentation électrique conventionnelle d'un lecteur 1 et d'un récepteur RFID 2 sans contact à couplage inductif.

Côté lecteur, le circuit d'antenne Ae peut être modélisé par une inductance équivalente Le, en série avec une résistance Re et une capacité Ce. Le circuit d'antenne Ae est connecté à un circuit électronique Pee du lecteur. L'impédance de sortie du lecteur peut être modélisée par une résistance Rce, connectée en série avec le circuit d'antenne Ae et une alimentation Ge.

Côté récepteur, le circuit d'antenne Ar peut être modélisé par une inductance équivalente Lr. Le circuit d'antenne Ar est connecté à un circuit électronique Per. Le circuit électronique contient une capacité Cr. La consommation électrique de ce circuit électronique peut être modélisée par une résistance Rr connectée en parallèle à l'inductance équivalente Lr.

Le couplage inductif induit le transfert d'énergie entre le lecteur et le récepteur par inductance mutuelle. Lorsque le récepteur est placé suffisamment proche du lecteur, l'antenne du lecteur est couplée à l'antenne du récepteur. Une tension alternative ou force électromotrice est ainsi induite dans le récepteur. Cette tension est redressée et généralement utilisée pour alimenter les fonctions du récepteur.

Pour permettre la transmission de données du récepteur vers le lecteur, le récepteur modifie l'impédance qu'il présente aux bornes du circuit d'antenne. Cette variation d'impédance est détectée par le lecteur du fait du couplage inductif. Des préconisations de conception de systèmes RFID de type inductif sont notamment définies dans les normes ISO 15693, ISO 18000-3 et ISO 14443. Ces normes fixent notamment la fréquence de la porteuse du signal à 13,56 MHz. La norme ISO 18000-2 fixe la porteuse du signal à un niveau inférieur à 135KHz. En pratique, la distance de communication entre le lecteur et le récepteur est relativement réduite, typiquement comprise entre une dizaine de cm et un mètre pour ces fréquences.

On peut considérer deux phases de fonctionnement distinctes pour le lecteur :
- une phase de communication lorsqu'un récepteur est identifié dans le champ du lecteur ;
- une phase d'attente lorsque aucun récepteur n'est encore identifié dans le champ du lecteur.

Avant toute phase de communication entre le lecteur et un récepteur, le lecteur doit identifier ce récepteur dans son champ de communication. Durant la phase d'attente, le lecteur cherche de façon périodique à identifier la présence d'un ou plusieurs récepteurs dans son champ de communication. A intervalles réguliers, le champ radiofréquence du lecteur est activé en excitant l'antenne avec une tension sinusoïdale à sa fréquence de résonance pour une durée prédéterminée. Pendant la durée de l'activation, le lecteur émet plusieurs requêtes de manière récursive selon un protocole standardisé. Suite à ces requêtes, le lecteur maintient son champ activé pour détecter une éventuelle réponse d'un récepteur. Afin d'accélérer la détection des récepteurs, le champ est activé avec un rapport cyclique relativement important durant une phase d'attente, par exemple de 0.25.

Le document EP0944014 décrit un procédé de détection d'un transpondeur RFID dans le champ d'un lecteur RFID. Selon ce procédé, le lecteur RFID applique une impulsion de tension aux bornes de son antenne d'une durée de 2µs. A la suite de cette impulsion, la réponse en intensité de l'antenne est mesurée et filtrée. En fonction de la vitesse de décroissance de cette réponse, le lecteur détermine la présence ou non d'un transpondeur dans son champ. Dans l'exemple fourni dans ce document, en l'absence de transpondeur RFID, la réponse en intensité présente un temps de décroissance d'environ 800µs correspondant à une centaine de cycles d'excitation.

Dans les différents domaines de l'électronique, une prise en compte accrue des problématiques environnementales et des problématiques d'autonomie conduit les développeurs à porter une attention croissante à la réduction de la consommation électrique. Par conséquent, il est souhaitable de réduire au maximum la consommation électrique du lecteur, en particulier durant les phases d'attente, en l'absence de récepteur identifié. La consommation durant les phases d'attente peut s'avérer non négligeable, les phases d'attente pouvant en outre constituer la majeure partie du temps de fonctionnement du lecteur.

L'invention vise à résoudre un ou plusieurs de ces inconvénients. L'invention porte ainsi sur un procédé de détection d'un récepteur sans contact dans le champ de l'antenne d'un lecteur sans contact, tel que défini dans les revendications annexées. L'invention porte également sur un lecteur sans contact, tel que défini dans les revendications annexées.

D'autres caractéristiques et avantages de l'invention ressortiront clairement de la description qui en est faite ci-après, à titre indicatif et nullement limitatif, en référence aux dessins annexés, dans lesquels :
- la figure 1 est une représentation électrique équivalente d'un système incluant un lecteur et un récepteur RFID de type inductif ;
- la figure 2 est un diagramme illustrant l'excitation de l'antenne d'un émetteur durant une phase de détection de récepteurs ;
- la figure 3 illustre la réponse indicielle de l'antenne du lecteur en absence de récepteur dans le champ du lecteur ;
- la figure 4 illustre la réponse indicielle de l'antenne du lecteur en présence d'un récepteur dans le champ du lecteur ;
- la figure 5 illustre un signal d'activation d'une mesure d'une réponse de l'antenne ;
- la figure 6 est un diagramme illustrant l'incidence du temps de montée de la rampe sur l'amplitude de la réponse ;
- la figure 7 est un diagramme illustrant une phase d'attente comprenant plusieurs étapes de détection successives ;
- la figure 8 illustre une phase d'échantillonnage en vue de réaliser la calibration de la réponse de l'antenne ;
- la figure 9 est une représentation schématique d'un exemple de lecteur susceptible de mettre en oeuvre l'invention ;
- la figure 10 est un diagramme comparatif d'enveloppes des puissances instantanées de lecteurs durant une étape de détection ;
- la figure 11 illustre différentes réponses de l'antenne du lecteur en fonction de la distance du récepteur.

L'invention propose un procédé de détection d'un récepteur sans contact dans le champ de l'antenne du lecteur. Pour cela, on excite l'antenne du lecteur par une différence de potentiel comprenant une rampe entre des première et deuxième valeurs de différences de potentiel, et un plateau à la deuxième valeur de différence de potentiel. La réponse de l'antenne est mesurée durant le plateau et comparée à une réponse de référence. On détermine la présence d'un récepteur dans le champ de l'antenne en fonction du résultat de la comparaison. Un plateau correspond au maintien à une même valeur de différence de potentiel.

L'invention permet de réduire sensiblement la consommation électrique du lecteur durant les phases d'attente sans altérer l'aptitude de reconnaissance des récepteurs. L'invention permet notamment de détecter la présence d'un récepteur sans nécessiter une excitation de l'antenne à sa fréquence de résonance, ce qui induit une réduction importante de la consommation électrique.

Durant la phase d'attente du lecteur, des étapes de détection sont réalisées à intervalles réguliers tant qu'aucun récepteur n'a été détecté dans le champ de l'antenne. L'étape de détection d'un récepteur durant une phase d'attente du lecteur inclut trois sous étapes :
- l'excitation de l'antenne par une différence de potentiel combinant une rampe et un plateau ;
- la mesure de la réponse de l'antenne ;
- la comparaison de la réponse mesurée à une réponse de référence et la détermination de la présence du récepteur.

La figure 2 est un diagramme représentant un exemple d'excitation appliquée à l'antenne d'un lecteur selon l'invention durant une étape de détection lors d'une phase d'attente. L'excitation appliquée est initiée à partir d'une première valeur de différence de potentiel continue appliquée aux bornes de l'antenne, en l'occurrence, cette première valeur est nulle. Une rampe de tension est appliquée aux bornes de l'antenne durant une première période Fm. Un plateau à une deuxième valeur de différence de potentiel est ensuite appliqué aux bornes de l'antenne durant une deuxième période Pl. Cette deuxième valeur de différence de potentiel est en l'occurrence une valeur haute (par exemple 5V) atteinte à la fin de la rampe de tension.

La rampe permet en pratique de charger le circuit résonnant formé par l'antenne et d'exciter l'antenne du lecteur dans une large gamme de fréquences. Il est ainsi aisé d'inclure la fréquence de résonance du récepteur dans cette large gamme de fréquence, ce qui facilite la génération d'un champ en retour.

Le plateau permet d'éviter de perturber la réponse en intensité de l'antenne du lecteur. Par conséquent, le plateau s'étend avantageusement sur la majeure partie de la durée de mesure de la réponse de l'antenne du lecteur (donc sur au moins 50% de la durée de mesure de la réponse de l'antenne du lecteur), voire sur l'intégralité de la durée de mesure de la réponse de l'antenne du lecteur (la mesure est alors effectuée uniquement durant le plateau). Avantageusement, le plateau présente une durée au moins égale à 8 périodes de résonance de l'antenne du lecteur, de sorte que la réponse peut être mesurée sans perturbations dans la période où son amplitude est la plus importante.

Le plateau permet en outre de limiter la consommation électrique de l'antenne en dehors de la durée de mesure. En effet, le courant traversant l'antenne du lecteur devient rapidement nul, ce qui aboutit à une consommation électrique nulle de l'antenne. Avantageusement, le plateau présente une durée au moins égale à 50 périodes de résonance de l'antenne du lecteur.

Une telle excitation présente une consommation électrique nettement plus réduite qu'une excitation à la fréquence de résonance du circuit d'antenne. La consommation électrique du lecteur durant la phase d'attente est ainsi fortement réduite.

La figure 3 illustre la réponse en intensité de l'antenne au signal d'excitation de la figure 2, en l'absence de récepteur dans le champ de l'antenne. La figure 4 illustre un exemple de réponse en intensité de l'antenne au signal d'excitation de la figure 2, en présence d'un récepteur dans le champ de l'antenne. Etant donnée la pente de la rampe de tension appliquée, ces réponses pourront être considérées comme des réponses indicielles.

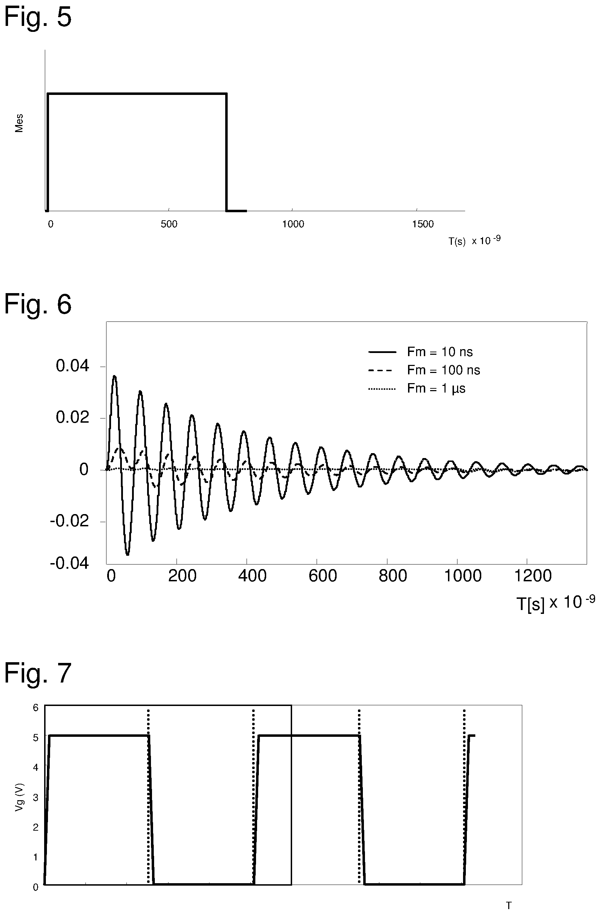

Les réponses sont avantageusement mesurées durant le plateau de l'excitation mais peuvent aussi être mesurées en partie durant la rampe. La mesure de la réponse n'est ainsi pas perturbée par l'excitation aux bornes de l'antenne. La figure 5 illustre le signal d'activation de l'échantillonnage de la réponse de l'antenne. L'échantillonnage est effectué pendant une période correspondant à une dizaine d'oscillations, soit 737 ns.

Comme illustré à la figure 3, en l'absence de récepteur dans le champ de l'antenne, le courant traversant l'antenne forme des oscillations amorties. Ces oscillations subissent une décroissance exponentielle modulée à la fréquence de résonance du circuit RLC série modélisant l'antenne et le circuit.

Comme illustré à la figure 4, en présence d'un récepteur dans le champ de l'antenne, le courant traversant l'antenne présente des oscillations modulées à la fréquence de résonance du circuit RLC série modélisant le circuit d'antenne du lecteur. Ces oscillations subissent à la fois un amortissement et un battement.

Ces différences de réponse peuvent s'expliquer en théorie par une altération de la fonction de transfert de l'antenne du lecteur en présence du récepteur dans son champ. Du fait que la fréquence de résonance de l'antenne du récepteur diffère dans une certaine mesure de celle de l'antenne du lecteur, le champ en retour généré par l'antenne du récepteur interfère avec l'antenne du lecteur. La désadaptation de l'antenne de l'émetteur en cas de couplage et la distance entre les antennes influent également sur la réponse. De plus, le couplage entre l'antenne du lecteur et l'antenne du récepteur provoque un décalage de la fréquence de résonance de l'antenne du lecteur.

La réponse en présence de plusieurs récepteurs pourra différer de celle de la figure 4. Cependant, une telle présence pourra aisément être identifiée du fait d'une grande différence par rapport à la réponse illustrée à la figure 3.

La figure 6 est un diagramme illustrant la réponse de l'antenne du lecteur en fonction de différents temps de montée de la rampe Fm. Les réponses de l'antenne ont été simulées avec une deuxième valeur de différence de potentiel égal à 5 V, et avec une durée de plateau infinie, en l'absence de récepteur dans le champ de l'antenne du lecteur.

On a pu constater que la réponse pour un temps de montée de 1 ns est équivalente à la réponse pour un temps de montée de 10 ns. L'amplitude de la réponse est fortement atténuée pour un temps de montée de 100 ns et quasiment nulle pour un temps de montée de 1 µs.

En pratique, pour une période de résonance T de l'antenne, le front montant présente avantageusement une durée inférieure à T/3, et de préférence une durée inférieure à T/4 (ce qui correspond à la durée d'un front montant d'une oscillation). Une telle durée du temps de montée permet de garantir une amplitude satisfaisante de la réponse de l'antenne, afin de pouvoir réaliser des mesures et des analyses satisfaisantes, sans que la rampe ne perturbe les oscillations de la réponse.

D'autres simulations réalisées avec une deuxième valeur de différence de potentiel nettement plus élevée ont démontré que le temps de montée de la rampe Fm était prépondérant sur l'amplitude de la réponse par rapport à la pente de cette rampe.

Des simulations supplémentaires ont démontré qu'une durée du plateau au moins égale à T/4 permettait de garantir une amplitude satisfaisante de la réponse de l'antenne en limitant les distorsions.

Pour optimiser la consommation électrique lors d'étapes de détection successives, le plateau de différence de potentiel est avantageusement maintenu jusqu'à l'étape de détection suivante. Comme illustré à la figure 7 (avec la tension appliquée par le générateur sur l'antenne en ordonnée), lors de l'étape de détection suivante, l'excitation comporte une rampe entre la deuxième valeur de différence de potentiel et la première valeur de différence de potentiel. On utilise ainsi un front descendant depuis le plateau précédent pour obtenir une réponse de l'antenne. La mesure précédente de la réponse de l'antenne est ainsi interrompue avant cette rampe de l'étape de détection suivante. Le départ de chaque nouvelle étape de détection est illustré par un trait vertical en pointillés la figure 7.

Pour procéder à la détection d'un récepteur dans le champ de l'antenne du lecteur, différentes comparaisons peuvent être effectuées entre la réponse de l'antenne mesurée et la réponse de référence. La comparaison peut notamment consister à calculer la corrélation entre la réponse de référence et la réponse mesurée, à comparer une amplitude de la réponse mesurée à une amplitude de référence, à comparer l'enveloppe de la réponse mesurée à l'enveloppe de la réponse de référence, à comparer la réponse spectrale mesurée à une réponse spectrale de référence (par exemple par une analyse de type FFT), ou à comparer des éléments statistiques (tels que la variance, la moyenne...) de la réponse mesurée par rapport à des éléments statistiques de la réponse de référence.

Si une importante similitude entre la réponse de référence et la réponse mesurée est déterminée lors de la comparaison, le lecteur en déduit l'absence de récepteur dans son champ. La phase d'attente se poursuit en répétant des étapes de détection.

Dans le cas contraire, on identifie une dissemblance entre la réponse de référence et la réponse mesurée, et le lecteur en déduit la présence d'un récepteur dans le champ de son antenne. Le lecteur active alors le champ radiofréquence de l'antenne en excitant celle-ci à sa fréquence de résonance et en émettant une requête à destination du récepteur, selon un protocole défini dans des standards de communication.

En cas de faux négatif, si un récepteur présent dans le champ de l'antenne du lecteur n'est pas détecté, ce récepteur sera détecté lors d'une étape de détection ultérieure. La période entre deux étapes de détection successives sera définie en fonction des besoins de l'application et pourra par exemple être inclus entre 10 µs et 10 ms.

En cas de faux positif, si le lecteur détermine à tort la présence d'un récepteur dans le champ de son antenne, le lecteur n'obtiendra pas de réponse à sa requête après avoir activé son champ radiofréquence. Le lecteur repassera ainsi en phase d'attente et répétera des étapes de détection.

Une réponse de référence de l'antenne est déterminée lors de la mise au point du lecteur ou durant une étape de calibration lors de la fabrication. Cette réponse est mesurée lors de l'application des rampes et des plateaux de différences de potentiel destinés à être appliqués durant les phases d'attente, cette réponse étant mesurée en l'absence de récepteur dans le champ du lecteur.

La réponse de l'antenne peut faire l'objet d'une caractérisation fréquentielle ou temporelle.

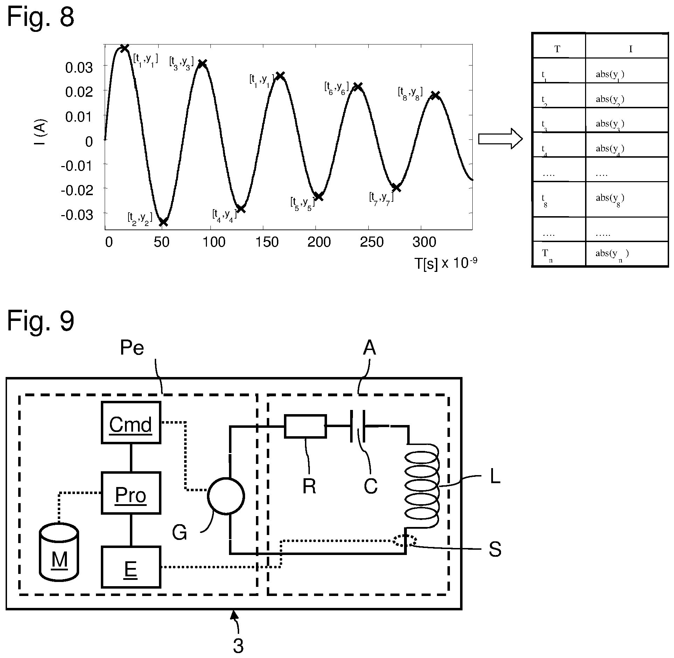

Selon un exemple de calibration, la réponse temporelle de l'antenne peut être numérisée par un procédé d'échantillonnage tel qu'illustré à la figure 8. L'échantillonnage peut consister à mémoriser seulement les extremums de la sinusoïde amortie de la réponse temporelle, ce qui revient à mémoriser la forme de l'enveloppe de la réponse. Les extremums peuvent être échantillonnés de manière synchrone, la réponse formant l'horloge d'échantillonnage. On récupère pour chaque échantillon une valeur de temps et une valeur d'amplitude correspondant à un extremum. Les valeurs échantillonnées peuvent être mémorisées dans un tableau pour être comparées aux valeurs échantillonnées durant une étape de détection lors du fonctionnement du lecteur.

La figure 9 est une représentation schématique d'un exemple de lecteur 3 configuré pour mettre en oeuvre l'invention. Le lecteur 3 comprend un circuit d'antenne A modélisé par une inductance équivalente L, en série avec une résistance R et une capacité C. Ce circuit d'antenne A est ainsi modélisé par un circuit résonant RLC série. Ce circuit RLC série peut présenter typiquement une fréquence de résonance de l'ordre de 13,56MHz pour un lecteur conforme à la norme ISO 14443. Le lecteur 3 comprend une sonde de mesure de courant S (par exemple une bobine de mesure de courant traversée par le circuit d'antenne). Le circuit d'antenne A est connecté à un circuit électronique Pe du lecteur 3. Le circuit électronique Pe inclut une alimentation G, un circuit d'échantillonnage E, une mémoire M, un circuit de traitement Pro et un circuit de commande Cmd. La sonde de mesure de courant S est connectée au circuit d'échantillonnage E. Le circuit de traitement Pro communique avec le circuit d'échantillonnage E, le circuit de commande Cmd et la mémoire M. Le circuit de commande Cmd commande l'excitation de l'alimentation G.

Le circuit de commande Cmd commande au générateur G d'appliquer l'excitation incluant la rampe et le plateau sur l'antenne A. Le circuit d'échantillonnage E échantillonne la réponse à cette excitation. La mémoire M stocke une réponse de référence de l'antenne A. Le circuit de traitement Pro compare la réponse échantillonnée à la réponse de référence mémorisée dans la mémoire M. Le circuit de traitement Pro détermine la présence d'un récepteur en fonction du résultat de cette comparaison. Si le circuit de traitement Pro détermine la présence d'un récepteur dans le champ de l'antenne A, un signal correspondant est transmis au circuit de commande Cmd. Le circuit de commande Cmd commande ensuite à l'alimentation G l'application d'une tension à la fréquence de résonance de l'antenne A pour l'émission d'une requête à destination du récepteur.

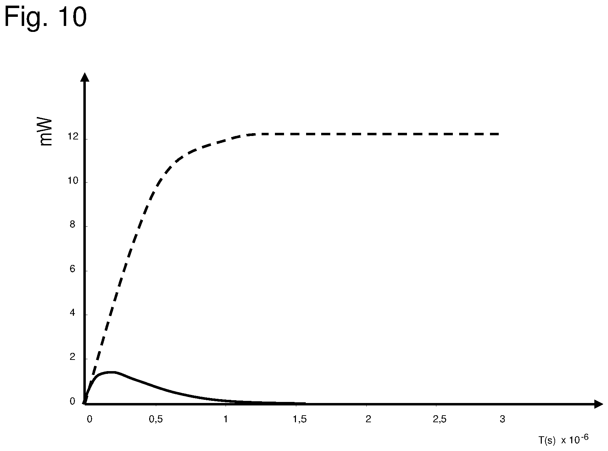

La figure 10 illustre l'enveloppe des puissances instantanées consommées par les générateurs respectifs d'un lecteur selon un mode de réalisation de l'invention et un lecteur comparable selon l'état de la technique. Les simulations ont été effectuées avec des circuits d'antenne modélisés par une résistance R de 7,3Ω, une capacité C de 90pF, une inductance de 1,5µH et une différence de 10V entre les première et deuxième valeurs de différences de potentiel appliquées par le générateur.

La courbe en trait plein correspond au lecteur selon le mode de réalisation de l'invention, la courbe en trait discontinu correspondant au lecteur selon l'état de la technique.

On constate d'une part que l'amplitude maximale de la puissance consommée par le lecteur selon l'invention est environ 10 fois inférieure à celle du lecteur selon l'état de la technique. En outre, la puissance consommée par le lecteur selon l'invention décroît et devient sensiblement nulle au bout de 1,5µs. A contrario, la puissance consommée par le lecteur selon l'état de la technique croît jusqu'à une amplitude maximale au bout de 1,5µs, puis reste à ce niveau pendant tout le reste de l'excitation radiofréquence de l'étape de détection.

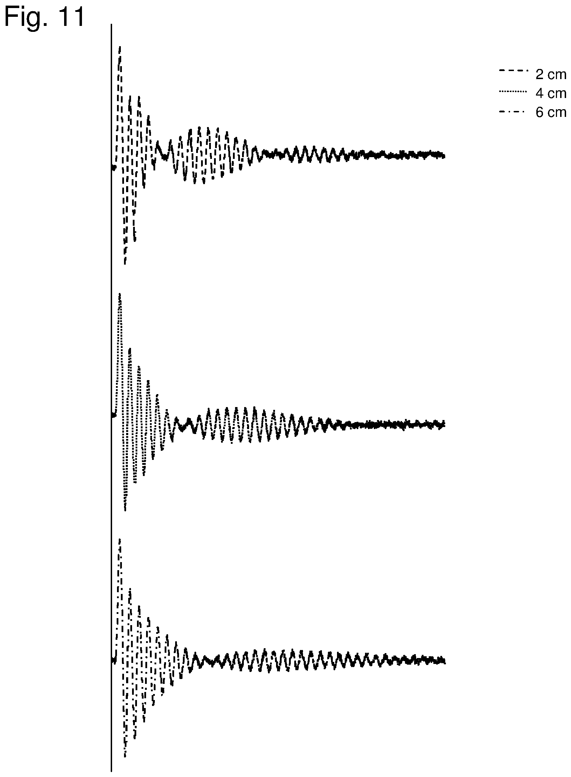

Selon un perfectionnement de l'invention, le lecteur peut avantageusement déterminer la distance le séparant d'un récepteur placé dans le champ de son antenne. La figure 11 illustre à cet effet différentes réponses de l'antenne du lecteur en fonction de la distance la séparant d'un récepteur. On constate que la réponse de l'antenne est fortement influencée par cette distance.

Pour déterminer la distance entre l'antenne du lecteur et le récepteur, on peut réaliser au préalable différentes calibrations du lecteur 3. Pour différentes distances, on échantillonne la réponse de l'antenne du lecteur. Ces réponses sont mémorisées dans le lecteur, comme des réponses de référence pour les différentes distances.

Lors d'une phase de détection, on peut comparer la réponse mesurée aux différentes réponses de référence pour déduire la distance entre l'antenne du lecteur et le récepteur. On pourra déterminer la distance comme étant celle dont la réponse de référence est la plus proche de la réponse mesurée, ou par interpolation de distance entre les deux distances dont les réponses de référence sont les plus proches de la réponse mesurée.

Selon un autre perfectionnement de l'invention, le lecteur identifie le type de carte présent dans le champ de son antenne. Une telle identification du type de récepteur peut être réalisée afin de renforcer l'authentification du récepteur par le lecteur, et ainsi d'éviter des fraudes. L'authentification est ainsi renforcée en utilisant la couche physique du système.

Une telle authentification pourra notamment être utilisée pour la détection d'une attaque de relais du type amplifier et relayer (pour amplify and forward en langue anglaise). Les attaques de type relais visent à activer un récepteur en plaçant discrètement un relais frauduleux à proximité de ce récepteur. Le relais est ensuite utilisé pour réaliser une transaction frauduleuse avec un lecteur distant. Pour une attaque du type décoder et transmettre (decode and forward en langue anglaise), on se référera à l'authentification du récepteur.

Pour permettre une telle identification du récepteur, on peut réaliser au préalable différentes calibrations du lecteur 3. Le lecteur 3 peut ainsi être calibré avec différents types de récepteurs. Pour chacun de ces types de récepteurs, on échantillonne la réponse de l'antenne du lecteur. Les différentes réponses sont mémorisées dans le lecteur, comme des réponses de référence pour les différents types de récepteurs. Plusieurs réponses pourront être mémorisées pour un même récepteur, pour tenir compte de plusieurs distances possibles.

Selon un perfectionnement, le lecteur peut retracer la trajectoire du récepteur, en analysant les réponses successives qu'il induit sur l'antenne du lecteur. Ces réponses pourront être comparées à des réponses de référence d'un récepteur à ces différentes distances. Ainsi, l'authenticité du récepteur pourra être déterminée de façon plus précise. La détection d'un relais frauduleux est notamment facilitée.

Lors d'une phase de détection, on peut comparer la réponse mesurée aux différentes réponses de référence pour déduire le type de récepteurs présents dans le champ de l'antenne du lecteur.

Lors de l'application d'une excitation aux bornes de l'antenne du lecteur, l'antenne du récepteur est parcourue par un courant. En vue d'accroître les performances d'authentification, on peut envisager que le récepteur mesure la réponse de son antenne à l'excitation de l'antenne du lecteur. Le récepteur peut alors transmettre la réponse mesurée au lecteur. Le lecteur peut alors renforcer l'authentification du récepteur de la façon suivante. Après avoir mesuré sa propre réponse, le lecteur peut déterminer une réponse attendue pour le récepteur à partir d'une base de données de correspondances. Le lecteur peut alors comparer la réponse attendue à la réponse mesurée transmise par le récepteur. En cas de forte disparité entre la réponse attendue et la réponse mesurée transmise par le récepteur, le lecteur pourra détecter une tentative de fraude.

## Revendications

1. Procédé de détection d'un récepteur sans contact dans le champ de l'antenne (A) d'un lecteur sans contact (3), comprenant les étapes de :
- excitation de l'antenne (A) du lecteur par une différence de potentiel comprenant :
- une rampe (Fm) entre des première et deuxième valeurs de différences de potentiel ;
- à la suite de la rampe, un plateau (Pl) à la deuxième valeur de différence de potentiel ;
- mesure de la réponse de l'antenne durant ledit plateau ;
- comparaison de la réponse mesurée à des réponses de référence correspondant à différents types de récepteurs présents dans le champ de l'antenne du lecteur ;
- identification du type de récepteur présent dans le champ de l'antenne du lecteur en fonction de cette dernière comparaison.
- détermination de la présence d'un récepteur dans le champ de l'antenne du lecteur sans contact en fonction du résultat de la comparaison.

2. Procédé selon la revendication 1, dans lequel l'antenne du lecteur (3) peut être modélisée par un résonateur présentant une résistance (R), une capacité (C) et une inductance (L) en série, avec T la période propre du résonateur, dans lequel la rampe présente une durée inférieure à T/3.

3. Procédé selon la revendication 2, dans lequel le plateau (Pl) présente une durée supérieure à 8 * T, la durée du plateau (Pl) étant de préférence au moins égale à 50% de la durée de la mesure de la réponse de l'antenne (A).

4. Procédé selon la revendication 3, dans lequel le plateau (Pl) présente une durée supérieure à 50 * T.

5. Procédé selon l'une quelconque des revendications 2 à 4, dans lequel la fréquence de résonance du résonateur est comprise entre 10 et 20 MHz.

6. Procédé selon l'une quelconque des revendications précédentes, comprenant en outre les étapes de :
- de préférence durant ledit plateau (Pl), interruption de ladite mesure de la réponse de l'antenne (A) ;
- à la suite dudit plateau (Pl), excitation de l'antenne (A) du lecteur (3) par une autre différence de potentiel comprenant :
- une autre rampe (Fm) entre les deuxième et première valeurs de différences de potentiel ;
- à la suite de l'autre rampe, un autre plateau à la première valeur de différence de potentiel ;
- mesure de la réponse de l'antenne durant ledit autre plateau (Pl) ;
- comparaison entre la réponse mesurée durant ledit autre plateau et une réponse de référence ;
- détermination de la présence d'un récepteur dans le champ du lecteur sans contact en fonction du résultat de cette dernière comparaison.

7. Procédé selon l'une quelconque des revendications précédentes, dans lequel le lecteur (3) et le récepteur mis en oeuvre sont du type à antenne à couplage inductif.

8. Procédé selon l'une quelconque des revendications précédentes, comprenant des étapes de :
- comparaison de la réponse mesurée à des réponses de référence correspondant à différentes distances entre l'antenne (A) du lecteur (3) et un récepteur ;
- détermination de la distance entre l'antenne (A) du lecteur (3) et un récepteur en fonction de la comparaison entre la réponse mesurée avec les réponses de référence.

9. Procédé selon l'une quelconque des revendications précédentes, dans lequel le type de récepteur identifié est un relais, le procédé comprenant en outre une étape de blocage d'une transaction entre le lecteur (3) et le relais identifié.

10. Procédé selon l'une quelconque des revendications précédentes, dans lequel la comparaison est choisie dans le groupe comprenant :
- le calcul de la corrélation entre la réponse de référence et la réponse mesurée ;
- la comparaison d'une amplitude de la réponse mesurée à une amplitude de la réponse de référence ;
- la comparaison de l'enveloppe de la réponse mesurée à l'enveloppe de la réponse de référence ;
- la comparaison de la réponse spectrale mesurée à la réponse spectrale de référence ;
- la comparaison d'éléments statistiques de la réponse mesurée à des éléments statistiques de la réponse de référence.

11. Lecteur sans contact (3), comprenant :
- une antenne (A) ;
- un circuit (Pe) configuré pour exciter sélectivement l'antenne avec une fréquence sensiblement égale à la fréquence de résonance de cette antenne durant une phase de communication avec un récepteur ;
**caractérisé en ce que** ledit circuit est en outre configuré pour :
- exciter sélectivement l'antenne avec une différence de potentiel comprenant :
- une rampe (Fm) entre des première et deuxième valeurs de différences de potentiel ;
- à la suite de la rampe, un plateau (Pl) à la deuxième valeur de différence de potentiel ;
- mesurer la réponse de l'antenne (A) durant ledit plateau ;
- comparer la réponse mesurée à des réponses de référence correspondant à différents types de récepteurs présents dans le champ de l'antenne du lecteur ;
- identifier le type de récepteur présent dans le champ de l'antenne du lecteur en fonction de cette dernière comparaison ;
- déterminer la présence d'un récepteur dans le champ de l'antenne en fonction du résultat de la comparaison.

12. Lecteur sans contact selon la revendication 11, dans lequel l'antenne (A) du lecteur (3) est modélisable par un résonateur présentant une résistance, une capacité et une inductance en série, avec T la période propre du résonateur, ledit circuit étant configuré pour appliquer ladite rampe avec une durée inférieure à 0,1 * T.

13. Lecteur sans contact selon la revendication 12, dans lequel ledit circuit est configuré pour appliquer ledit plateau (Pl) avec une durée supérieure à 8 * T.

14. Lecteur sans contact selon l'une quelconque des revendications 11 à 13, dans lequel le lecteur (3) est du type à antenne à couplage inductif.

## Patentansprüche

1. Verfahren zur kontaktlosen Erkennung eines Empfängers im Feld der Antenne (A) eines kontaktlosen Lesers (3), umfassend die folgenden Schritte:
- Erregen der Antenne (A) des Lesers durch eine Potentialdifferenz, umfassend:
- eine Rampe (Fm) zwischen dem ersten und zweiten Potentialdifferenzwert;
- im Anschluss an die Rampe ein Plateau (Pl) an dem zweiten Potentialdifferenzwert;
- Messen der Antwort der Antenne während des Plateaus;
- Vergleichen der gemessenen Antwort mit Referenzantworten, die verschiedenen Arten von Empfängern entsprechen, die in dem Feld der Antenne des Lesers vorhanden sind;
- Identifizieren der Art des Empfängers, der in dem Feld der Antenne des Lesers vorhanden ist, in Abhängigkeit von diesem letzten Vergleichen;
- Bestimmen der Anwesenheit eines Empfängers in dem Feld der Antenne des kontaktlosen Lesers in Abhängigkeit von dem Ergebnis des Vergleichens.

2. Verfahren nach Anspruch 1, wobei die Antenne des Lesers (3) von einem Resonator modelliert werden kann, der in Reihe einen Widerstand (R), eine Kapazität (C) und eine Induktivität (L) aufweist, wobei T die Eigenperiode des Resonators ist, wobei die Rampe eine Dauer von weniger als T/3 aufweist.

3. Verfahren nach Anspruch 2, wobei das Plateau (Pl) eine Dauer von über 8 * T aufweist, wobei die Dauer des Plateaus (Pl) vorzugsweise mindestens gleich 50 % der Dauer der Messung der Antwort der Antenne (A) ist.

4. Verfahren nach Anspruch 3, wobei das Plateau (Pl) eine Dauer von über 50 * T aufweist.

5. Verfahren nach einem der Ansprüche 2 bis 4, wobei die Resonanzfrequenz des Resonators zwischen 10 und 20 MHz beträgt.

6. Verfahren nach einem der vorhergehenden Ansprüche, ferner umfassend die folgenden Schritte:
- Unterbrechen der Messung der Antwort der Antenne (A) vorzugsweise während des Plateaus (Pl);
- Erregen der Antenne (A) des Lesers (3) im Anschluss an das Plateau (Pl) durch eine andere Potentialdifferenz, umfassend:
- eine andere Rampe (Fm) zwischen dem ersten und zweiten Potentialdifferenzwert;
- ein anderes Plateau an dem ersten Potentialdifferenzwert im Anschluss an die andere Rampe;
- Messen der Antwort der Antenne während des anderen Plateaus (Pl);
- Vergleichen zwischen der Antwort, die während des anderen Plateaus gemessen wird, und einer Referenzantwort;
- Bestimmen der Anwesenheit eines Empfängers in dem Feld des kontaktlosen Lesers in Abhängigkeit von dem Ergebnis dieses letzten Vergleichens.

7. Verfahren nach einem der vorhergehenden Ansprüche, wobei der Leser (3) und der Empfänger, die verwendet werden, von dem Typ mit induktiv gekoppelter Antenne sind.

8. Verfahren nach einem der vorhergehenden Ansprüche, umfassend die folgenden Schritte:
- Vergleichen der gemessenen Antwort mit Referenzantworten, die verschiedenen Abständen zwischen der Antenne (A) des Lesers (3) und einem Empfänger entsprechen;
- Bestimmen des Abstands zwischen der Antenne (A) des Lesers (3) und einem Empfänger in Abhängigkeit von dem Vergleichen zwischen der gemessenen Antwort mit den Referenzantworten.

9. Verfahren nach einem der vorhergehenden Ansprüche, wobei die Art des identifizierten Empfängers ein Relais ist, wobei das Verfahren ferner einen Schritt des Blockierens einer Transaktion zwischen dem Leser (3) und dem identifizierten Relais aufweist.

10. Verfahren nach einem der vorhergehenden Ansprüche, wobei das Vergleichen aus der Gruppe ausgewählt wird, die Folgendes aufweist:
- das Berechnen der Korrelation zwischen der Referenzantwort und der gemessenen Antwort;
- das Vergleichen einer Amplitude der gemessenen Antwort mit einer Amplitude der Referenzantwort;
- das Vergleichen der Hüllkurve der gemessenen Antwort mit der Hüllkurve der Referenzantwort;
- das Vergleichen der gemessenen spektralen Antwort mit der spektralen Referenzantwort;
- das Vergleichen statistischer Elemente der gemessenen Antwort mit statistischen Elementen der Referenzantwort.

11. Kontaktloser Leser (3), umfassend:
- eine Antenne (A);
- einen Schaltkreis (Pe), der konfiguriert ist, um selektiv die Antenne mit einer Frequenz zu erregen, die im Wesentlichen gleich der Resonanzfrequenz dieser Antenne während einer Kommunikationsphase mit dem Empfänger ist;
**dadurch gekennzeichnet, dass** der Schaltkreis ferner konfiguriert ist, um:
- selektiv die Antenne mit einer Potentialdifferenz zu erregen, umfassend:
- eine Rampe (Fm) zwischen dem ersten und zweiten Potentialdifferenzwert;
- ein Plateau (Pl) an dem zweiten Potentialdifferenzwert im Anschluss an die Rampe;
- die Antwort der Antenne (A) während des Plateaus zu messen;
- die gemessene Antwort mit Referenzantworten zu vergleichen, die verschiedenen Arten von Empfängern entsprechen, die in dem Feld der Antenne des Lesers vorhanden sind;
- die Art des Empfängers, der in dem Feld der Antenne des Lesers vorhanden ist, in Abhängigkeit von diesem letzten Vergleichen zu identifizieren;
- die Anwesenheit eines Empfängers in dem Feld der Antenne in Abhängigkeit von dem Ergebnis des Vergleichens zu bestimmen.

12. Kontaktloser Leser nach Anspruch 11, wobei die Antenne (A) des Lesers (3) von einem Resonator modelliert werden kann, der in Reihe einen Widerstand, eine Kapazität und eine Induktivität aufweist, wobei T die Eigenperiode des Resonators ist, wobei der Schaltkreis konfiguriert ist, um die Rampe mit einer Dauer von weniger als 0,1 * T anzuwenden.

13. Kontaktloser Leser nach Anspruch 12, wobei der Schaltkreis konfiguriert ist, um das Plateau (Pl) mit einer Dauer von über 8 * T anzuwenden.

14. Kontaktloser Leser nach einem der Ansprüche 11 bis 13, wobei der Leser (3) von dem Typ mit induktiv gekoppelter Antenne ist.

## Claims

1. Method for detection of a contactless receiver in the field of the antenna (A) of a contactless reader (3), comprising the steps for:
- excitation of the antenna (A) of the reader by a potential difference comprising:
- a ramp (Fm) between first and second values of potential differences;
- following the ramp, a plateau (Pl) at the second value of potential difference;
- measurement of the response of the antenna during the said plateau;
- comparison of the measured response with reference responses corresponding to various types of receivers present in the field of the antenna of the reader;
- identification of the type of receiver present in the field of the antenna of the reader depending on this latter comparison;
- determination of the presence of a receiver in the field of the antenna of the contactless reader depending on the result of the comparison.

2. Method according to Claim 1, in which the antenna of the reader (3) can be modelled by a resonator having a resistance (R), a capacitance (C) and an inductance (L) in series, with T the natural period of the resonator, in which the ramp has a duration less than T/3.

3. Method according to Claim 2, in which the plateau (PL) has a duration greater than 8 * T, the duration of the plateau (PL) being preferably equal to at least 50% of the duration of the measurement of the response of the antenna (A).

4. Method according to Claim 3, in which the plateau (PL) has a duration greater than 50 * T.

5. Method according to any one of Claims 2 to 4, in which the resonant frequency of the resonator is in the range between 10 and 20 MHz.

6. Method according to any one of the preceding claims, furthermore comprising the steps for:
- preferably during the said plateau (PL), interruption of the said measurement of the response of the antenna (A);
- following the said plateau (PL), excitation of the antenna (A) of the reader (3) by another potential difference comprising:
- another ramp (Fm) between the second and first values of potential differences;
- following the other ramp, another plateau at the first value of potential difference;
- measurement of the response of the antenna during the said other plateau (PL);
- comparison between the measured response during the said other plateau and a reference response;
- determination of the presence of a receiver in the field of the contactless reader depending on the result of the latter comparison.

7. Method according to any one of the preceding claims, in which the reader (3) and the receiver implemented are of the type with an inductive coupling antenna.

8. Method according to any one of the preceding claims, comprising steps for:
- comparison of the measured response with reference responses corresponding to various distances between the antenna (A) of the reader (3) and a receiver;
- determination of the distance between the antenna (A) of the reader (3) and a receiver depending on the comparison between the measured response with the reference responses.

9. Method according to any one of the preceding claims, in which the type of receiver identified is a relay, the method furthermore comprising a step for blocking a transaction between the reader (3) and the identified relay.

10. Method according to any one of the preceding claims, in which the comparison is chosen from within the group comprising:
- the calculation of the correlation between the reference response and the measured response;
- the comparison of an amplitude of the measured response with an amplitude of the reference response;
- the comparison of the envelope of the measured response with the envelope of the reference response;
- the comparison of the measured spectral response with the reference spectral response;
- the comparison of statistical elements of the measured response with statistical elements of the reference response.

11. Contactless reader (3), comprising:
- an antenna (A);
- a circuit (Pe) configured for selectively exciting the antenna with a frequency substantially equal to the resonant frequency of this antenna during a phase of communication with a receiver;
**characterized in that** the said circuit is furthermore configured for:
- selectively exciting the antenna with a potential difference comprising:
- a ramp (Fm) between first and second values of potential differences;
- following the ramp, a plateau (PL) at the second value of potential difference;
- measuring the response of the antenna (A) during the said plateau;
- comparing the measured response with reference responses corresponding to various types of receivers present in the field of the antenna of the reader;
- identifying the type of receiver present in the field of the antenna of the reader depending on this latter comparison;
- determining the presence of a receiver in the field of the antenna depending on the result of the comparison.

12. Contactless reader according to Claim 11, in which the antenna (A) of the reader (3) can be modelled by a resonator with a resistance, a capacitance and an inductance in series, with T the natural period of the resonator, the said circuit being configured for applying the said ramp with a duration less than 0.1 * T.

13. Contactless reader according to Claim 12, in which the said circuit is configured for applying the said plateau (PL) with a duration greater than 8 * T.

14. Contactless reader according to any one of Claims 11 to 13, in which the reader (3) is of the type with an inductive coupling antenna.
